# EUROPEAN PATENT APPLICATION

(11) **EP 2 018 005 A2**
(43) Date of publication of application: **21.01.2009**
(21) Application number: 08252159.2
(22) Date of filing: 23.06.2008
(51) Int. Cl.: H04L 12/28

(54) **Multi-radio channel bonding**

(30) Priority: 22.06.2007 US 936870 P
(71) Applicant: Belkin International, Inc., Compton, CA 90220 (US)
(72) Inventor: Chen, Li-Ter Unit A, 9/F Tower 1,, West Kowloon, Hong Kong (CN); Leibow, Michael, Rochester, NY 14618 (US)
(74) Representative: Lawrence, John

(57) **Abstract**

A number of embodiments concern a computer component (101) for communicating data between a computer and a network. The computer component can include: (a) a dual band management component (220,261) configured to receive first data from at least one of the computer and the network and configured to divide the first data into two or more portions; (b) a first network adapter (220,260) electrically coupled to the dual band module and configured to transmit a first portion of the two or more portions in accordance with a first wireless standard; and (c) a second network adapter (221,262) electrically coupled to the dual band module and configured to transmit a second portion of the two or more portions in accordance with a second wireless standard. The first wireless standard can be different from the second wireless standard. Other embodiments are disclosed herein.

## Description

### CROSS-REFERENCE TO RELATED APPLICATIONS

This application claims the benefit of U.S. Provisional Application No. 60/936,870. filed June 22, 2007 and entitled Multi-Radio Channel Bonding.

### FIELD OF THE INVENTION

This invention relates generally to electrical devices, and relates more particularly to wireless computer components for communicating data between a computer and a network, and methods of using the same.

### DESCRIPTION OF THE BACKGROUND

The amount of data transferred between computers and the Internet increases each year. For example, users are uploading and downloading larger video and audio files using their home computers. At the same time, wireless networks are replacing wired networks as the standard network in homes and offices.

The bandwidth of standard home or office wireless networks is, however, significantly less than the bandwidth of standard wired networks. For example, a wireless network connection using the Institute of Electrical and Electronics Engineers, Inc. (IEEE) 802.11a standard and a five gigahertz frequency band would have a bandwidth of 54 megabits per second. A wireless network connection using the IEEE 802.11b standard and the 2.4 gigahertz frequency band has a bandwidth of 11 megabits per second. On the other hand, the bandwidth of a Fast Ethernet (e.g., 100BASE-T) connection using the IEEE 802.3 standard has a bandwidth of 100 megabits per second, and the bandwidth of Gigabit Ethernet (e.g., 1000BASE-X) connection using the IEEE 802.3z standard has a bandwidth of one gigabit per second. The difference in bandwidth causes frustration and annoyance to users of home and office wireless networks.

Accordingly, a need or potential for benefit exists for an apparatus, device, or system that increases the available bandwidth for wireless networks.

### BRIEF DESCRIPTION OF THE DRAWINGS

To facilitate further description of the embodiments, the following drawings are provided in which:
F1G. 1 illustrates an example of a computer component for broadcasting data, according to a first embodiment;
FIG. 2 illustrates a representative block diagram of the elements included on the circuit boards inside the chassis of the computer component of FIG. 1, according to the first embodiment;
FIG. 3 illustrates an example of computer that is suitable for working with the computer component of FIG. 1, according to a first embodiment;
FIG. 4 illustrates a representative block diagram of the elements included on the circuit boards inside the chassis of the computer of FIG. 3, according to the first embodiment;
FIG. 5 is a block diagram of an example of a system configured to transfer data between the computer of FIGs. 3 and 4 and a network, according to the first embodiment;
FIG. 6 is a block diagram of an example of a dual band management component of the computer component of FIGs. 1 and 2, according to the first embodiment;
FIG. 7 is a block diagram of an example of a dual band management component of the computer of FIGS. 3 and 4, according to the first embodiment; and
FIG. 8 illustrates a flow chart for an example of a method of transferring data from the computer of FIGs. 3 and 4 to the network of FIG. 5, according to the first embodiment.

For simplicity and clarity of illustration, the drawing figures illustrate the general manner of construction, and descriptions and details of well-known features and techniques may be omitted to avoid unnecessarily obscuring the invention. Additionally, elements in the drawing figures are not necessarily drawn to scale. For example, the dimensions of some of the elements in the figures may be exaggerated relative to other elements to help improve understanding of embodiments of the present invention. The same reference numerals in different figures denote the same elements.

The terms "first," "second," "third," "fourth," and the like in the description and in the claims, if any, are used for distinguishing between similar elements and not necessarily for describing a particular sequential or chronological order. It is to be understood that the terms so used are interchangeable under appropriate circumstances such that the embodiments described herein are, for example, capable of operation in sequences other than those illustrated or otherwise described herein. Furthermore, the terms "include," and "have," and any variations thereof, are intended to cover a non-exclusive inclusion, such that a process, method, system, article, device, or apparatus that comprises a list of elements is not necessarily limited to those elements, but may include other elements not expressly listed or inherent to such process, method, system, article, device, or apparatus.

The terms "left," "right." "front," "back," "top," "bottom," "over," "under," and the like in the description and in the claims, if any, are used for descriptive purposes and not necessarily for describing permanent relative positions. It is to be understood that the terms so used are interchangeable under appropriate circumstances such that the embodiments of the invention described herein are, for example, capable of operation in other orientations than those illustrated or otherwise described herein. "System," as used herein, can refer to, or otherwise include, one computer application or two or more computer applications. The terms "couple," "coupled," "couples," "coupling," and the like should be broadly understood and refer to connecting two or more elements or signals, electrically and/or mechanically, either directly or indirectly through intervening circuitry and/or elements. Two or more electrical elements may be electrically coupled, either direct or indirectly, but not be mechanically coupled; two or more mechanical elements may be mechanically coupled, either direct or indirectly, but not be electrically coupled; two or more electrical elements may be mechanically coupled, directly or indirectly, but not be electrically coupled. Coupling (whether only mechanical, only electrical, or both) may be for any length of time, e,g., permanent or semi-permanent or only for an instant.

"Electrical coupling" and the like should be broadly understood and include coupling involving any electrical signal, whether a power signal, a data signal, and/or other types or combinations of electrical signals. "Mechanical coupling" and the like should be broadly understood and include mechanical coupling of all types.

### DETAILED DESCRIPTION OF EXAMPLES OF EMBODIMENT

A number of embodiments can concern a computer component for communicating data between a computer and a network. The computer component can include: (a) a dual band management component configured to receive first data from at least one of the computer and the network and configured to divide the first data into two or more portions; (b) a first network adapter electrically coupled to the dual band module and configured to transmit a first portion of the two or more portions in accordance with a first wireless standard; and (c) a second network adapter electrically coupled to the dual band module and configured to transmit a second portion of the two or more portions in accordance with a second wireless standard. The first wireless standard can be different from the second wireless standard.
In various examples, the first network adapter and the second network adapter can be configured to transmit and receive over the same frequency band. In other examples, the first network adapter and the second network adapter can be configured to transmit and receive over different frequency band.

In some examples, the first network adapter can be configured to transmit a first portion of the two or more portions over at least one frequency between about 5,725 to 5,875 Megahertz. In the same or different embodiment, the second network adapter can be configured to transmit the second portion of the two or more portions over at least one frequency between about 2,400 to 2,500 Megahertz. In an alternative example, the second network adapter can be configured to transmit the second portion of the two or more portions over at least one frequency between about 5,725 to 5,875 Megahertz. In some examples, the computer component can be one or more of: (a) a router; (b) a wireless access point; and/or (c) a network interface card.

The same or different embodiments can concern a network interface card adapted for coupling a computer to a network. The network interface card can include: (a) a first wireless transmitter; (b) a second wireless transmitter; (c) a first wireless receiver; (d) a second wireless receiver; and (e) a dual band management component configured to communicate a first segment of the first data to the first wireless transmitter and a second segment of the first data to the second wireless transmitter. The first wireless transmitter can be configured to wirelessly transmit the first segment of the first data in accordance with a first wireless standard. The first wireless receiver can be configured to wirelessly receive a first piece of a second data in accordance with the first wireless standard. The second wireless transmitter can be configured to wirelessly transmit the second segment of the first data in accordance with a second wireless standard. The second wireless receiver can be configured to wirelessly receive a second piece of the second data in accordance with the second wireless standard.

Some embodiments can concern a computer component for communicating data between a computer and a network. The computer component can include: (a) a dual band management component configured to receive first data from at least one of the computer and the network and configured to divide the first data into two or more portions; (b) a first network adapter electrically coupled to the dual band module and configured to transmit a first portion of the two or more portions in accordance with a first wireless standard over a first frequency band and (c) a second network adapter electrically coupled to the dual band module and configured to transmit a second portion of the two or more portions in accordance with the first wireless standard over a second frequency band. The first wireless standard is different from the second wireless standard.

Other embodiments can concern a network interface card adapted for coupling a computer to a network. The network interface card can include: (a) a first wireless transmitter; (b) a second wireless transmitter; (c) a first wireless receiver; (d) a second wireless receiver; and (e) a dual band management component configured to communicate a first segment of first data to the first wireless transmitter and a second segment of the first data to the second wireless transmitter. The first wireless transmitter is configured to wirelessly transmit the first segment of the first data in accordance with a first wireless standard over a first frequency band. The first wireless receiver is configured to wirelessly receive a first piece of a second data in accordance with the first wireless standard over the first frequency band. The second wireless transmitter is configured to wirelessly transmit the second segment of the first data in accordance with the first wireless standard over a second frequency band. The second wireless receiver is configured to wirelessly receive a second piece of the second data in accordance with the first wireless standard over the second frequency band.

In some examples, the first wireless transmitter can be configured to transmit over at least one frequency between about 5,725 to 5,875 Megahertz and the first wireless receiver can be configured to receive over at least one frequency between about 5.725 to 5,875 Megahertz. In the same or different example, the second wireless transmitter can be configured to transmit over at least one frequency between about 2,400 to 2,500 Megahertz and the second wireless receiver can be configured to receive over at least one frequency between about 2,400 to 2,500 Megahertz.

In various examples, the dual band management component can include: (a) a computer communications module configured to receive first data from one or more computer programs, the one or more computer programs are executed on the computer; (b) a data disassembly module configured to divide the first data into at least the first segment and the second segment; (c) a bandwidth calculation module configured to calculate available bandwidth of the first wireless transmitter and the second wireless transmitter and communicate the available bandwidth of the first wireless transmitter and the second wireless transmitter to the data disassembly module; and (d) a data communication module configured to communicate the first segment of the first data to the first wireless transmitter and the second segment of the second data to the second wireless transmitter. The data disassembly module can be configured to divide the first data such that the relative size of the first segment to the second segment is proportional to the available bandwidth of the first transmitter and the second transmitter respectively. In the same or different embodiments, the dual band management component can further include a data assembly module configured to combine a second piece and first piece of the second data to reconstruct a complete copy of the second data. The dual band management component can be further configured to receive the first piece of the second data from the first wireless receiver and the second piece of the second data from the second wireless receiver; and the computer communications module can be further configured to communicate the complete copy of the second data to the one or more computer programs,

Yet another embodiment can concern a method of transmitting data between two electronic devices. The method can include: (a) receiving first data from a first one of the two electronic devices; (b) dividing the first data into at least a first segment and a second segment; (c) transmitting the first segment in accordance with a first wireless standard to a second one of the two electronic devices; and (d) transmitting the second segment in accordance with a second wireless standard to the second one of the two electronic devices.

Still another embodiment concerns a method of transmitting data between two electronic devices. The method can include: (a) receiving first data from a first one of the two electronic devices; (b) dividing the first data into at least a first segment and a second segment; (c) transmitting the first segment in accordance with a first wireless standard over a first frequency band to a second one of the two electronic devices; and (d) transmitting the second segment in accordance with the first wireless standard over a second frequency band to the second one of the two electronic devices.

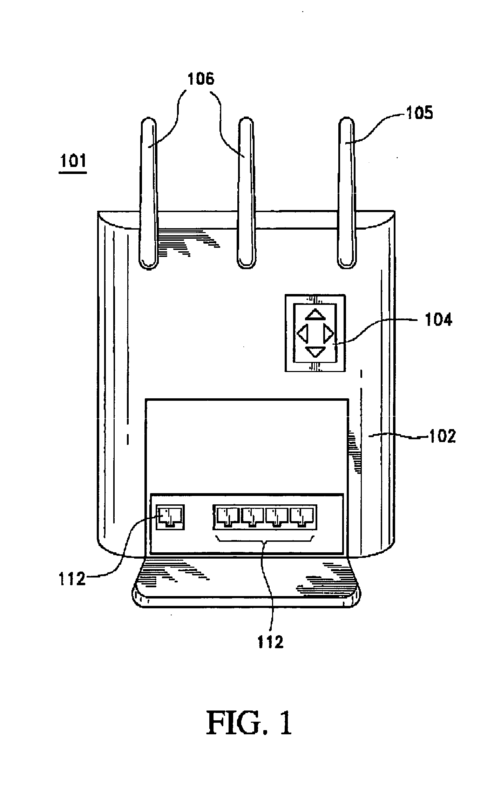

FIG. 1 illustrates an example of computer component 101 for broadcasting data, according to a first embodiment. In the same or different embodiments computer component 101 can be considered a computer component for communicating data between a computer and a network.

Computer component 101 can be a gateway device. A gateway device can be an electrical device used to connect a computer to a network or other electrical devices in a network. For example, computer component 101 can include one or more of: a router, a hub, a wireless access point, a modem-router, a VoIP (voice over internet protocol) modem-router, a wireless Ethernet bridge, and a wireless network interface card (WNIC).

Computer component 101 includes a chassis 102 containing one or more circuit boards (not shown), one or more network connectors 112, an input device 104, and one or more antennas 105 and 106. Antennas 105 and 106 can be used for information transfer using electromagnetic waves (i.e., a wireless network), Network connectors 112 can be any type of network connectors such as, for example, Ethernet connectors, universal serial bus (USB) connectors, serial port connectors, parallel port connectors, and the like.

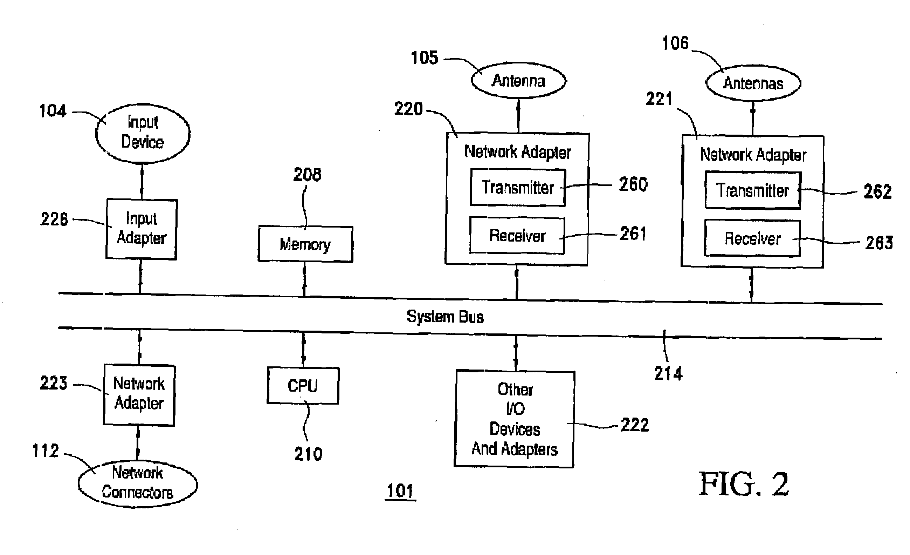

A representative block diagram of an example of the elements included in the circuit boards inside chassis 102 is shown in FIG. 2. In this embodiment, a central processing unit (CPU) 210 is coupled to a system bus 214. In various embodiments, the architecture of CPU 210 can be compliant with any of a variety of commercially distributed architecture families.

System bus 214 also is coupled to memory 208 that can include both read only memory (ROM) and random access memory (RAM). Non-volatile portions of memory 208 or the ROM can be encoded with a boot code sequence suitable for restoring computer component 101 (FIG. 1) to a functional state after a system reset.

In the depicted embodiment of FIG. 2, various I/O devices such as one or more network adapters 220, 221, and 223. an input adapter 226, and other I/O devices 222 can be coupled to system bus 214. Network adapter 221 can be coupled to antennas 106, and network adapter 220 can be coupled to antenna 105. The number of antennas coupled to each of network adapters 221 and 220 can vary. For example, a single network adapter can be used with antennas 105 and 106.

Network connectors 112 and antennas 105 and 106. though network adapters 223, 220, 221, respectively, can be coupled to CPU 210 directly or through system bus 214. In other embodiments, a single network adapter can be used to control all of these devices.

In one example, network adapter 220 is configured to be coupled to network connectors 112. In one example, network connectors 112 include one ADSL (Asymmetric Digital Subscriber Line) connector and four Ethernet ports.

In some examples, network adapters 220 and 221 can each include transmitters 260 and 262, respectively. Network adapter 220 and 221 can also include receivers 261 and 263, respectively. Transmitters 260 and 262 can be radio frequency or other wireless transmitters. Receivers 261 and 263 can be radio frequency or other wireless receivers. In numerous embodiments, transmitters 260 and 262 and receivers 261 and 263 can include or be radios.

In many embodiments, network adapter 220 can be configured to transmit and receive data in accordance with a first wireless standard. That is, transmitter 260 can transmit data in accordance with the first wireless standard, and receiver 261 can receive data in accordance with the first wireless standard.

Similarly, network adapter 221 can configured to transmit and receive data in accordance with a second wireless standard. That is, transmitter 262 can transmit data in accordance with the second wireless standard, and receiver 263 can receive data in accordance with the second wireless standard. The first wireless standard can be different from the second wireless standard.

In some examples, network adapter 220 transmits and receives in accordance with the IEEE 802.11b standard, and network adapter 221 can transmit and receive in accordance with the IEEE 802.11n standard. In other examples, network adapter 221 can transmit and receive in accordance with the IEEE 802.11g standard.

The term "wireless standard, as used herein, refers to the original IEEE 802.11 standard, the IEEE 802.11a standard, the IEEE 802.11b standard, the IEEE 802.11g standard, the IEEE 802.11n standard, any other IEEE 802.11 standards or amendments, or any other standard protocol used to wirelessly transmit data over a local area network. In one embodiment, "wireless standard" does not include satellite communication standards or cellular telephone communication standards (e.g., GSM (Global System for Mobile Communications) standards, IS-95 (Interim Standards) standards, TDMA (time divisional multiple access) standards, and CDMA (code division multiple access) standards) designed for non-local area networks.

In different embodiments, network adapter 220 can transmit and receive in accordance with a first wireless standard and over a first frequency band, and network adapter 221 can transmit and receive in accordance with the first wireless standard and over a second frequency band. As an example, network adapter 220 can transmit and receive in accordance with the IEEE 802.11n standard and over the 2.4 GHz (gigahertz) band (i.e., about 2,400 to 2,500 Megahertz). Network adapter 221 can transmit and receive in accordance with the IEEE 802.11n standard and over the 5 GHz band (i.e., about 5,725 to 5,875 Megahertz).

Other variations to the component shown in FIG. 2 are known in the art. Furthermore, although many other components of computer networking component 101 (FIGs. 1 and 2) are not shown, such components and their interconnections are well known to those of ordinary skill in the art.

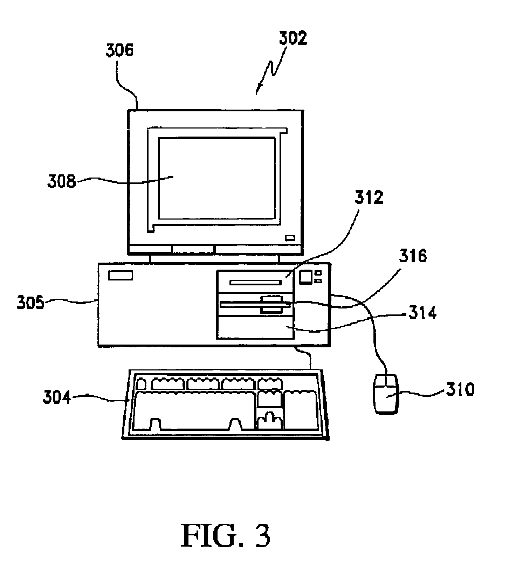

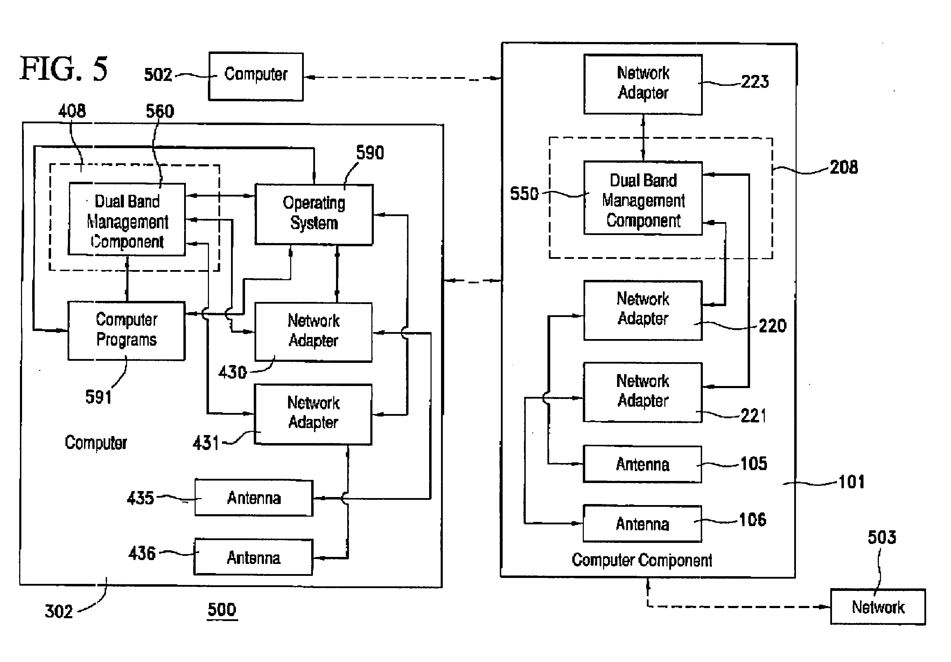

When computer component 101 in FIGs. 1 and 2 is running, program instructions stored in memory 208 are executed by CPU 210. A portion of the program instruction, stored in memory 208, can be suitable for carrying out at least portions of the methods of transmitting data between computer 302 (FIG. 3) and a network, as described hereinafter with respect to FIGs. 5-8. In same or different examples, at least portions of the methods of transmitting data between computer 302 (FIG. 3) and a network, as described hereinafter with respect to FIGs. 5-8, can be implement by circuitry in computer component 101.

FIG. 3 illustrates an example of computer 302 that is suitable for working with computer component 101. In some embodiments, computer 302 can also be considered a computer component. Computer 302 includes a chassis 305 containing one or more circuit boards (not shown), a floppy drive 312, a Digital Video Disc (DVD) drive and/or a Compact Disc Read-Only Memory (CD-ROM) drive 316, a mouse 310, a keyboard 304. a monitor 306 with a video screen 308, and a hard drive 314.

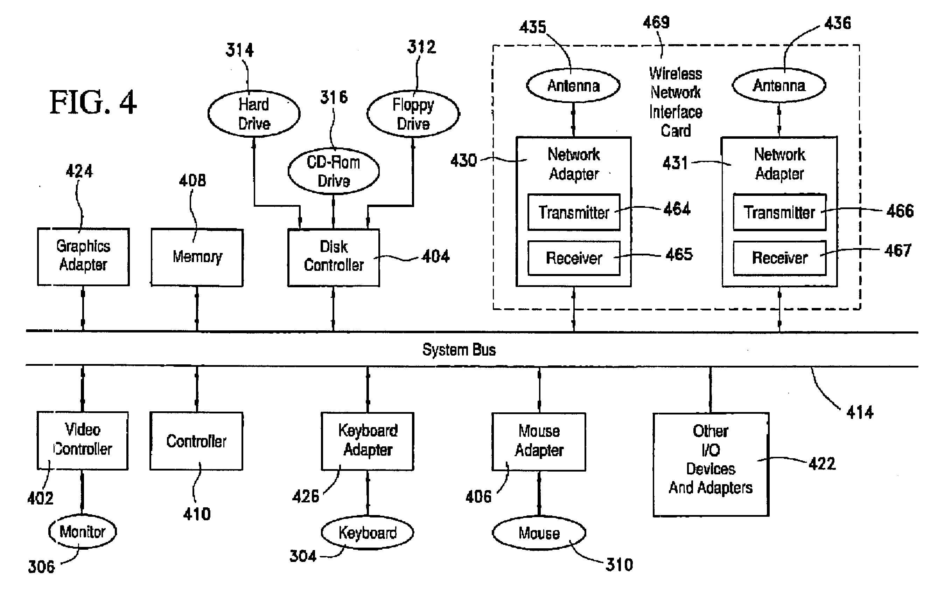

A representative block diagram of an example of the elements included in the circuit boards inside chassis 305 is shown in FIG. 4. A CPU 410 in FIG. 4 is coupled to system bus 414 in FIG. 4. In various embodiments, the architecture of CPU 410 can be compliant with any of a variety of commercially distributed architecture families including, but not limited to, the RS/6000 family, the Motorola 68000 family, or the Intel x86 family.

System bus 414 also is coupled to memory 408 that includes both read only memory (ROM) and random access memory (RAM). Non-volatile portions of memory 408 or the ROM can be encoded with a boot code sequence suitable for restoring computer 302 (FIG. 3) to a functional state after a system reset. In addition, memory 408 can include microcode such as a Basic Input-Output System (BIOS).

In the depicted embodiment of FIG. 4. various I/O devices such as a disk controller 404, a graphics adapter 424, a video controller 402, a keyboard adapter 426, a mouse adapter 406, network adapters 430 and 431, and other I/O devices and adapters 422 can be coupled to system bus 414. Keyboard adapter 426 and mouse adapter 406 are coupled to keyboard 304 (FIGs. 3 and 4) and mouse 310 (FIGs. 3 and 4), respectively, While graphics adapter 424 and video controller 402 are indicated as distinct units in FIG. 4, video controller 402 can be integrated into graphics adapter 424, or vice versa in other embodiments. Video controller 402 is suitable for refreshing monitor 306 (FIGs. 3 and 4) to display images in video screen 308 (FIG. 3) of computer 302 (FIG. 3). Disk controller 404 can control hard drive 314 (FIGs. 3 and 4), floppy drive 312 (FIGs. 3 and 4), and CD-ROM drive 316 (FIGs. 3 and 4). In other embodiments, distinct units can be used to control each of these devices separately.

Each of network adapters 430 and 431 can be coupled to one or more antennas 435 and 436, respectively. In some embodiments, network adapters 430 and 431 are part of a single WNIC card 469 plugged or coupled to an expansion port (not shown) in computer 302 (FIG. 3). In other embodiments. WNIC card 469 is a wireless network card built into computer 302. A wireless network adapter can be built into computer 302 by having wireless Ethernet capabilities integrated into the motherboard chipset (not shown), or implemented via a dedicated wireless Ethernet chip (not shown), connected through the PCI (peripheral component interconnector) or a PCI express bus.

In some examples, network adapters 430 and 431 can each include transmitters 464 and 466, respectively. Network adapter 430 and 431 can also include receivers 465 and 467, respectively. Transmitters 464 and 466 can be radio frequency or other wireless transmitters. Receivers 465 and 467 can be radio frequency or other wireless receivers. In numerous embodiments, transmitters 464 and 466 and receivers 465 and 467 can include or be radios.

In many embodiments, network adapter 430 can be configured to transmit and receive data in accordance with a first wireless standard. That is, transmitter 464 can transmit data in accordance with the first wireless standard, and receiver 465 can receive data in accordance with the first wireless standard.

Similarly, network adapter 431 can be configured to transmit and receive data in accordance with a second wireless standard. That is, transmitter 466 can transmit data in accordance with the second wireless standard, and receiver 467 can receive data in accordance with the second wireless standard. The first wireless standard can be different from the second wireless standard.

In some examples, network adapter 430 transmits and receives in accordance with the IEEE 802.11b standard, and network adapter 431 can transmit and receive in accordance with the IEEE 802.11n standard. In other examples, network adapter 431 can transmit and receive in accordance with the IEEE 802.11g standard.

In different embodiments, network adapter 430 can transmit and receive in accordance with a first wireless standard and over a first frequency band, and network adapter 431 can transmit and receive in accordance with a first wireless standard and over a second frequency band. As an example, network adapter 430 can transmit and receive in accordance with the IEEE 802.11n standard and over the 2.4 GHz (gigahertz) band, and network adapter 431 can transmit and receive in accordance with the IEEE 802.11n standard and over the 5 GHz band.
Other variations to the component shown in FIG. 2 are known in the art. Furthermore, although many other components of computer 302 (FIGs. 3) are not shown, such components and their interconnections are also well-known to those of ordinary skill in the art.

When computer 302 (FIGs. 3) is running, program instructions stored in a floppy disk in floppy drive 312, in a CD-ROM in CD-ROM drive 316. in hard drive 314, or in memory 408 (FIG. 4) are executed by CPU 410 (FIG. 4). A portion of the program instructions, stored in these devices, can be suitable for carrying out at least portions of the methods of transmitting data between computer 302 (FIG. 3) and a network, as described hereinafter with respect to FIGs. 5-8. In same or different examples, at least portions of the methods of transmitting data between computer 302 (FIG. 3) and a network, as described hereinafter with respect to FIGs, 5-8, can be implement by circuitry in computer 302.

FIG. 5 is a block diagram of an example of a system 500 configured to transfer data between computer 302 and a network 503. according to the first embodiment. In some embodiments, system 500 can be considered a wireless communications system used to transfer data between a computer and a network using network adapters 430, 431, 220, and 221. System 500 is merely exemplary and the invention is not limited to the specific embodiments or examples presented herein. System 500 can be employed in many different embodiments or examples not specifically depicted or described herein.

As an example, computer component 101 can include: (a) a dual band management component 550; (c) network adapters 220, 221, and 223; and (d) antennas 105 and 106.

In the same or different examples, computer 302 can include: (a) an operating system 590; (b) one or more computer programs 591; (c) a dual band management component 560; (d) network adapters 430 and 431; and (e) antennas 435 and 436. In some examples, network adapters 430 and 431, antennas 435 and 436, and dual band management component 560 are located in WNIC card 469 (FIG. 4).
In another embodiment, dual band management component 560 can be located in memory 408 (FIG. 4), and network adapters 430 and 431, antennas 435 and 436 are located in WNIC card 469 (FIG. 4).

System 500 is configured to wirelessly transfer data between computer 302 and computer component 101 at rates approaching twice the rate of traditional wireless networks. In many examples, network 503 communicates data to computer component 101. Dual band management component 550 can divide the data into multiple segments. Network adapter 221 and antennas 106 can communicate a first portion of the segments to antenna 435 and network adapter 430 using a first frequency band and in accordance with a first wireless standard. Likewise, network adapter 220 and antenna 105 can simultaneously communicate a second portion of the segments to antenna 436 and network adapter 431 using: (a) a second frequency band and in accordance with the first wireless standard, or (b) in accordance with a second wireless standard and in accordance with the first frequency band or a second frequency band.

Dual band management component 560 can aggregate the multiple segments into the original data stream and, afterwards) can communicate the original data stream to computer programs 591 running in computer 302.

Similarly, in numerous examples, to transfer data from computer 302 to network 503, computer programs 591 can communicate the data to dual band management component 560. Dual band management component 560 can divide the data into multiple segments. Network adapter 430 and antenna 435 can communicate a first portion of the segments to antennas 106 and network adapter 221 using a first frequency band and in accordance with a first wireless standard. Likewise, network adapter 431 and antenna 436 can simultaneously communicate a second portion of the segments to antenna 105 and network adapter 220 using: (a) a second frequency band and in accordance with the first wireless standard, or (b) in accordance with a second wireless standard and in accordance with the first frequency band or a second frequency band. Dual band management component 550 can aggregate the multiple segments into the original data stream and, afterwards, can communicate the original data stream to network 503.

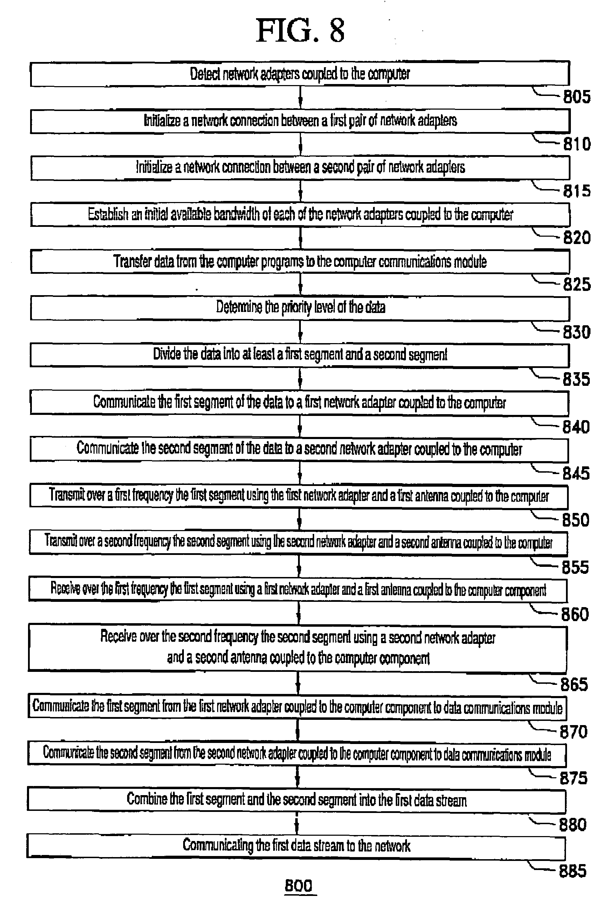

In some embodiments, computer 502 can contain components identical or similar to the components of computer 302. In these embodiments, computer component 101 can communicate data to both computer 302 and computer 502 using the method described below in FIG. 8.

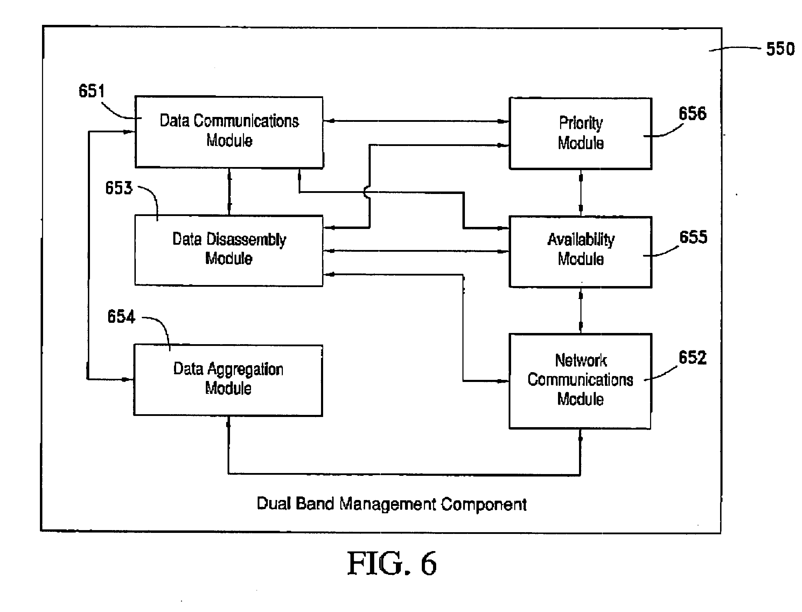

FIG. 6 is a block diagram of an example of dual band management component 550, according to the first embodiment. Dual band management component 550 can include: (a) a data communication module 651 configured to communicate one or more segments of data to and from network adapters 220 and 221 (FIGs. 2 and 5); (b) a network communications module 652 configured to communicate data streams to and from network 503 (FIG. 5) through network connectors 112 (FIGs. 1 and 2); (c) a data disassembly module 653 configured break up the data received from network 503 (FIG. 5) into at least two segments; (d) a data aggregation module 654 configured to combine the segments of data received from network adapters 220 and 221 (FIGs. 2 and 5) into a single data stream; (e) a bandwidth calculator or availability module 655 configured to determine a transfer capacity of network adapters 220 and 221 (FIGs. 2 and 5): and (f) a priority module 656 configured to determine a priority level of the data in the data stream received from network 503 (FIG. 5).

In some embodiments, each segment of the data received from network 503 (FIG. 5) is associated with one adapter of network adapters 220 and 221 (FIGs. 2 and 5). In these embodiments, data disassembly module 653 is configured to break up the data received from network 503 (FIG. 5) such that the amount of data in each segment of the at least two segments is related to the transfer capacity of the adapter associated with that segment of data. In the same or different embodiment, data disassembly module 653 is configured to divide the data such that the relative size of each segment is proportional to the available bandwidth of the associated network adapter. In the same or different examples, dual band management component 550 and/or 560 (FIG. 5) uses load-balancing techniques.

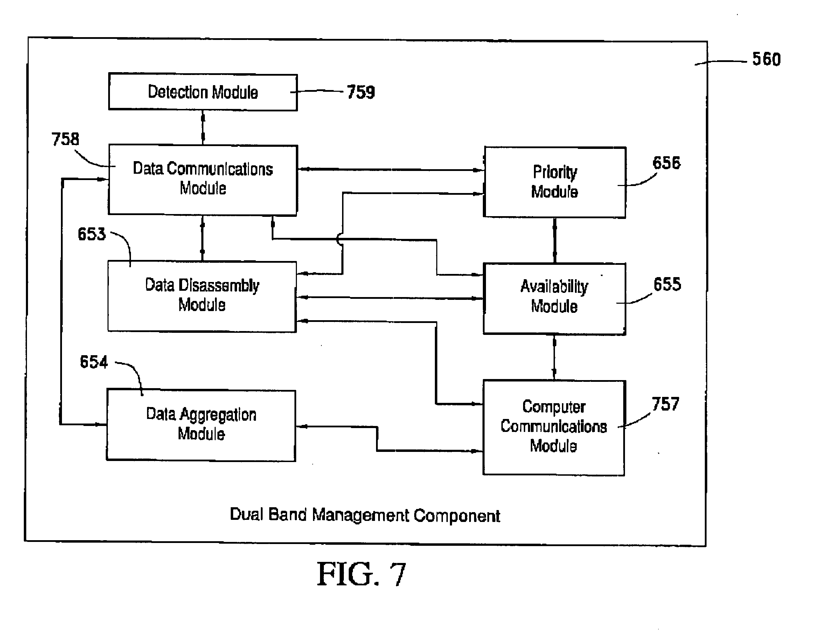

FIG. 7 is a block diagram of an example of a dual band management component 560, according to the first embodiment. Dual band management component 560 can include: (a) a data communications module 758 configured to communicate one or more segments of data to and from network adapters 430 and 431 (FIGs. 4 and 5); (b) a computer communications module 757 configured to communicate data streams to and from computer programs 591 (FIG. 5); (c) data disassembly module 653 configured to break up the data received from computer programs 591 (FIG. 5) into at least two segments; (d) data aggregation module 654 configured to combine the segments of data received from network adapters 430 and 431 (FIGs. 4 and 5) into a single data stream; (e) availability module 655 configured to determine a transfer capacity network adapters 430 and 431 (FIGs. 4 and 5); (f) priority module 656 configured to determine a priority level of the data in the data stream received from computer programs 591 (FIG. 5); and (g) a detection module 759 configured to detect network adapters coupled to computer 302 (FIGs. 3 and 5). In some embodiments, detection module 759 can also be a part of dual band management component 550.

In some embodiments, each segment of the data received from computer programs 591 (FIG. 5) is associated with one adapter of network adapters 430 and 431 (FIGs. 4 and 5). In these embodiments, data disassembly module 653 is configured to divide or break up the data received from computer programs (FIG. 5) such that the amount of data in each segment of the at least two segments is related to transfer capacity of the adapter associated with that segment of data. In the same or different embodiment, data disassembly module 653 is configured to divide the data such that the relative size of each segment is proportional to the available bandwidth of the associated network adapter.

FIG. 8 illustrates a flow chart for an example of a method 800 of transferring data from computer 302 (FIGs. 3 and 5) to network 503 (FIG. 5), according to the first embodiment. It should be appreciated that this method is merely illustrative of a technique for implementing the various aspects of certain embodiments described herein, and that system 500 (FIG. 5) and method 800 are not limited to this particular embodiment, as numerous other embodiments (including, but not limited to, other sequences of the same steps) are possible.

In this illustrated example, a first activity in method 800 is an activity 805 of detecting the network adapters coupled to computer 302 (FIGs. 3 and 5). Referring again to FIG. 7, detection module 759 is configured to detect any network adapter coupled to computer 302 (FIGs. 3 and 5). In one example, detection module 759 can access lists or tables of devices counted to computer 302 (FIGs. 3 and 5), stored by operating system 590 (FIG. 5). In the embodiment illustrated in FIG. 5, two network adapters 430 and 431 are coupled to computer 302.

Referring again to FIG. 8, the next activity in method 800 is an activity 810 of initialising a network connection between network adapter 430 (FIGs. 4 and 5) and network adapter 220 (FIGs. 2 and 5).
The next activity in method 800 is an activity 815 of initializing a network connection between network adapters 431 (FIGs. 4 and 5) and network adapter 220 (FIGs. 2 and 5). Activities 810 and 815 can occur in reverse order or simultaneously with each other.

Subsequently, method 800 includes an activity 820 of establishing an initial available bandwidth of each of network adapters 430 and 431 (FIGs. 4 and 5). Referring to FIG. 7, in many embodiments, availability module 655 in dual band management component 560 establishes the initial available bandwidth using previous available bandwidths of each network connection or network adapters 430 and 431 (FIGs. 4 and 5). In alternative embodiments, information regarding the type and theoretical bandwidth of the network connection or of network adapters 430 and 431 (FIGs. 4 and 5) is used to establish the initial bandwidth. For example, a network connection using the IEEE 802.11a standard and the five gigahertz frequency band would have a theoretical bandwidth of 54 megabits per second. A network connection using the IEEE 802.11b standard and the 2.4 gigahertz frequency band would have a theoretical bandwidth of 11 megabits per second. A network connection using the IEEE 802.11n standard and the 2.4 or 5.0 gigahertz frequency band would have a theoretical bandwidth of 74 megabits per second.

In other embodiments, instead of establishing the bandwidth of the network connection, availability module 655 determines an initial allocation of data between the two network connections. In some examples, availability module 655 uses data saved regarding past allocations of data to determine the initial allocation. In alternative examples, availability module 655 can allocate a predetermined percentage of data between the two network connections (e.g., a 50-50 division).

Referring again to FIG. 8, the next activity in method 800 is an activity 825 of transferring data from computer programs 591 (FIG, 5) to computer communications module 757 (FIG. 7). The data transferred can include various types of data including, but not limited to, ftp (file transfer protocol) data, http (hyper text transfer protocol) data, audio-visual streaming data, and VoIP (voice-over-IP) data. In some examples, transferring data from computer programs 591 can mean that dual band management component 560 (FIG. 5 and 7) receives data from computer 302 (FIGs. 3 and 5).

The next activity in method 800 is an activity 830 of determining the priority level of the data. In some examples, the priority is determined using priority module 656 (FIG. 7). After the priority of the data is determined, the data and a priority tag are communicated to data disassembly module 653 (FIG. 7). Activities 820, 825, and 830 can occur in other sequences as well.

In some embodiments, priority can be given to data related to real-time activities over other data applications. For example, audio-visual strearning data and VoIP data can be given priority over other type of data.

In some examples, data with priority is transferred over the highest quality network connection. In some embodiments, the highest quality network connection is the network connection with the lowest amount of packet loss, In the same or different examples, higher priority data can be allocated a guaranteed bandwidth. That is, the higher priority data can have a predetermined amount of bandwidth can be made available regardless of the bandwidth needs of other data.

In some embodiments, priority module 656 (FIG. 7) can determine the priority level of data by the tagging of the data by computer programs 591 (FIG. 5). In other embodiments, priority module 656 (FIG. 7) can analyze the data to determine the type and priority. In yet other embodiments, a user can set the priority to each type of data.

The next activity in method 800 is an activity 835 of dividing the data stream into at least a first segment and a second segment. In some examples, the data is divided using the data disassembly module 653 (FIG. 7). In various examples, dual band management component 560 (FIGs. 5 and 7) is configured to provide to each one of network adapters 430 and 431 (FIGs. 4 and 5) a portion of the data with a size proportional to the thoughput of that adapter. For example, if network adapter 430 (FIGs. 4 and 5) has a throughput that is twice as high as the throughput of network adapter 431 (FIGs. 4 and 5) and if the data stream includes portions 1 through 10, then dual band management component 560 (FIGs. 5 and 7) can send portions 1, 2, 4. 5, 7, 8, and 10 to network adapter 430 (FIGs. 4 and 5) and portions 3. 6, and 9 to network adapter 431 (FIGs. 4 and 5).

In one embodiment, the first segment can be associated with the network connection between network adapters 430 (FIGs. 4 and 5) and network adapter 220 (FIGs. 2 and 5), The second segment can be the network connection between network adapters 431 (FIGs. 4 and 5) and network adapter 221 (FIGs. 2 and 5). In alternative embodiments, the data stream can be divided into three or more segments.

Referring to FIG. 7, in some embodiments, availability module 655 can communicate to data disassembly module 653 the available bandwidth in each of the network connections. In one example, data disassembly module 653 divides the data based in the available bandwidth, That is, data disassembly module 653 can apply load-balancing to the network connections. In other embodiments, data disassembly module 653 can allocate a predetermined portion of the data to each network connection.

The division of the data between the network connections can be continuously changing based on the varying bandwidth and availability of each network connection (e.g., changing radio frequency conditions, changing network traffic patterns). For example, if the amount of packet loss increases in one network connection, the amount of data allocated to that network connection can decrease. If the throughput of a data link increases, however, the amount of data allocated to that network connection can increase. In some embodiments, the data division is performed at the packet level.

In some embodiments, identifying or marking information is added to the first segment and the second segment to allow the reconstruction of the data stream. For example, each segment could be numbered so that data aggregation module 654 in the receiving dual band management component can rejoin the segments to reconstruct exactly the original data stream. This additional information can decrease the thoughput of system 500. In one example, however, the thoughput is decreased by only ten percent by this additional information.

After allocating the data between the first and second segments, referring again to FIG. 8, the next activity in method 800 is an activity 840 of communicating the first segment from data communications module 758 (FIG. 7) to network adapter 430 (FIGs. 4 and 5).

Subsequently, method 800 includes an activity 845 of communicating the second segment from data communications module 758 (FIG. 7) to network adapter 431 (FIGs. 4 and 5). Activities 840 and 845 can occur in reverse order or simultaneously with each other.

The next activity in method 800 is an activity 850 of transmitting or broadcasting over a first frequency the first segment using network adapter 430 (FIGs. 4 and 5) and antenna 435 (FIGs. 4 and 5) using a first frequency band and in accordance with the first wireless standard.

Method 800 also includes an activity 855 of transmitting or broadcasting over a second frequency the second segment using network adapter 430 (FIGs. 4 and 5) and antenna 435 (FIGs. 4 and 5) using: (a) a second frequency band and in accordance with the first wireless standard, or (b) in accordance with a second wireless standard. In some embodiments, activity 855 is concurrent or simultaneous with activity 850, or they can occur in reverse order. Also, activities 840, 845, 850, and 855 can occur simultaneously with each other.

Referring again to FIG. 5, in some embodiments, network adapter 430 and network adapter 431 are configured to transmit and receive over different frequency bands. That is, the first frequency is different from the second frequency. For example, network adapter 430 can be configured to transmit the first segment over at least one frequency between 5725 and 5875 megahertz (i.e., the 5 GHz (gigahertz) band). Network adapter 431 can transmit the second segment over at least one frequency between 2400 and 2500 megahertz (i.e.. the 2.4 GHz band). In these examples, network adapters 430 and 431 can use the same wireless standard.

In the same or different embodiment, network adapters 430 and 431 can also transfer and receive the first and second segments, respectively, in accordance with different wireless standards.

In some examples, network adapter 430 is configured to transmit the first segment in accordance with the IEEE 802.11g standard. In various examples, network adapter 431 also can be configured to transmit the second segment in accordance with the IEEE 802.11g standard.

In different examples, network adapter 430 is configured to transmit the first segment in accordance with the IEEE 802.11n standard, and network adapter 431 can be configured to transmit the second segment in accordance with the IEEE 802.11g standard. In further embodiments, both of network adapters 430 and 431 can be configured to communicate using one of the IEEE 802.11a or IEEE 802.11b standard.

The standard and frequency that network adapters 430 and 431 communicate over are not completely independent from one another. Some standards are associated with a certain frequency band. For examples, IEEE 802.11b standard is only for use in the 2.4 GHz band.
Referring again to FIG. 8, the next activity in method 800 is an activity 860 of receiving over the first frequency the first segment using network adapter 220 (FIGs. 2 and 5) and antennas 106 (FIGs. 1, 2, and 5) using a first frequency band and in accordance with the first wireless standard.

Method 800 also includes an activity 865 of receiving over the second frequency the second segment using network adapter 221 (FIGs. 2 and 5) and antenna 105 (FIGs. 1, 2, and 5) using: (a) a second frequency band and in accordance with the first wireless standard, or (b) in accordance with a second wireless standard. Activities 860 and 865 can occur in reverse order or simultaneously with each other, and they can also occur simultaneously with activities 850 and 855.

Subsequently, method 800 includes an activity 870 of communicating the first segment from network adapter 220 (FIGs, 2 and 5) to data communications module 651 (FIG, 6).

Method 800 also includes an activity 875 of communicating the second segment from network adapter 221 (FIGs. 2 and 5) to data communications module 651 (FIG. 6). In some embodiments, activity 870 and 875 can be simultaneous with each other or in reverse order. In other embodiments, the order of activities 870 and 875 depends on when the first and second segment are received by network adapters 221 and 220 (FIGs. 2 and 5), respectively. Activities 840, 845, 850, 855, 860. 865, 870, and 875 can also occur simultaneously with each other.

Subsequently, method 800 includes an activity 880 of combining the first segment and the second segment into the first data stream using data aggregation module 654 (FIG. 6). In one embodiment, data aggregation module 654 (FIG. 6) uses the numbering or tags added to the first and second segment by data disassembly module 653 (FIG. 7) to reassemble the data stream.

Finally, method 800 includes an activity 885 of communicating the first data stream to network 503 (FIG. 5) using network communications module 652 (FIG. 6).

In some embodiments, the method of transferring data from network 503 (FIG. 5) to computer 302 (FIGs. 3 and 5) can be similar to method 800. In transferring data from network 503 (FIG. 5) to computer 302 (FIGs. 3 and 5), network adapters 220 and 221 are transmitting data (FIG. 2) and network adapters 430 and 431 (FIG. 4) are receiving the data. Accordingly, the method of transferring data from network 503 (FIG. 5) to computer 302 (FIGs. 3 and 5) would be apparent to one skilled in the art in light of FIGs. 1-8 and the aforementioned discussion of transferring data from computer 302 (FIGs. 3 and 5) to network 503 (FIG. 5).

Although the invention has been described with reference to specific embodiments, it will be understood by those skilled in the art that various changes may be made without departing from the spirit or scope of the invention. For example, to one of ordinary skill in the art, it will be readily apparent the terms "segment," "set." "portion," "piece," "data groups," and the like can be used interchangeably. In another example. computer component 101 (FIGs. 1 and 2) can include three or more network adapters identical or similar to network adapters 220 and 221 (FIG. 2). Similarly, computer 302 (FIG. 3 and 4) or WNIC card 469 (FIG. 4) can include three or more network adapters identical or similar to network adapters 430 and 431 (FIG. 4).

Additional examples of such changes have been given in the foregoing description. Accordingly, the disclosure of embodiments of the invention is intended to be illustrative of the scope of the invention and is not intended to be limiting. It is intended that the scope of the invention shall be limited only to the extent required by the appended claims.

For example, to one of ordinary skill in the art, it will be readily apparent that the system discussed herein may be implemented in a variety of embodiments, and that the foregoing discussion of certain of these embodiments does not necessarily represent a complete description of all possible embodiments. Rather, the detailed description of the drawings, and the drawings themselves, disclose at least one preferred embodiment of the invention, and may disclose alternative embodiments of the invention.

All elements claimed in any particular claim are essential to the invention claimed in that particular claim. Consequently, replacement of one or more claimed elements constitutes reconstruction and not repair. Additionally, benefits, other advantages, and solutions to problems have been described with regard to specific embodiments. The benefits, advantages, solutions to problems, and any element or elements that may cause any benefit, advantage, or solution to occur or become more pronounced, however, are not to be construed as critical, required, or essential features or elements of any or all of the claims.

Moreover, embodiments and limitations disclosed herein are not dedicated to the public under the doctrine of dedication if the embodiments and/or limitations: (1) are not expressly claimed in the claims; and (2) are or are potentially equivalents of express elements and/or limitations in the claims under the doctrine of equivalents.

## Claims

1. A computer component for communicating data between a computer and a network, the computer component comprising:
a dual band management component configured to receive first data from at least one of the computer and the network and configured to divide the first data into two or more portions;
a first network adapter electrically coupled to the dual band module and configured to transmit a first portion of the two or more portions in accordance with a first wireless standard; and
a second network adapter electrically coupled to the dual band module and configured to transmit a second portion of the two or more portions in accordance with a second wireless standard;
wherein:
the first wireless standard is different from the second wireless standard; and
the data comprises the first data.

2. The computer component of claim 1, wherein:
a size of the first portion and the second portion of the two or more portions are proportional to a throughput of each of the first network adapter and the second wireless adapter; and
the dual band management component is further configured to provide to the first portion of the two or more portions to the first network adapter and provide the second portion of the two or more portions to the second network adapter.

3. The computer component of any of the preceding claims, wherein:
the first network adapter is configured to transmit the first portion of the two or more portions in accordance with an IEEE 802.11n standard; and
the first wireless standard is the IEEE 802.11n standard.

4. The computer component of claim 3, wherein:
the second network adapter is configured to transmit the second portion of the two or more portions in accordance with an IEEE 802.11b standard; and
the second wireless standard is the IEEE 802.11b standard.

5. The computer component of claim 3, wherein:
the second network adapter configured to transmit the second portion of the two or more portions in accordance with an IEEE 802.11g standard; and
the second wireless standard is the IEEE 802.11g standard.

6. The computer component of any of the preceding claims, wherein:
the first network adapter is further configured to receive a first portion of second data in accordance with the first wireless standard;
the second network adapter is further configured to receive a second portion of second data in accordance with the second wireless standard; and
the data further comprises the second data.

7. The computer component of claim 6, wherein:
the first network adapter is configured to communicate the first portion of the second data to the dual band communications module;
the second network adapter is configured to communicate the second portion of the second data to the dual band communications module; and
the dual band management component is configured to assemble the second data based on the first portion of the second data received from the first network adapter and the second portion of the second data received from the second wireless adapter.

8. The computer component of claim 7, wherein:
the dual band management component comprises:
a network communications module configured to receive the first data from the at least one of the computer and the network;
a data disassembly module configured to divide the first data into the two or more portions of the first data;
an availability module configured to calculate available bandwidth of the first network adapter and the second network adapter and communicate the available bandwidth of the first network adapter and the second network adapter to the data disassembly module; and
a data communication module configured to communicate the first portion of the two or more portions of the first data to the first network adapter and the second portion of the two or more portions of the first data to the second network adapter,
a data assembly module configured to combine the first portion of the second data and the second portion of the second data to reconstruct a complete copy of the second data.
wherein:
the computer communications module is further configured to communicate the complete copy of the second data to the at least one of the computer and the network.

9. A network interface card adapted for coupling a computer to a network, the network interface card comprising:
a first wireless transmitter;
a second wireless transmitter;
a first wireless receiver;
a second wireless receiver; and
a dual band management component configured to communicate a first segment of first data to the first wireless transmitter and a second segment of the first data to the second wireless transmitter,
wherein:
the first wireless transmitter is configured to wirelessly transmit the first segment of the first data in accordance with a first wireless standard;
the first wireless receiver is configured to wirelessly receive a first piece of a second data in accordance with the first wireless standard;
the second wireless transmitter is configured to wirelessly transmit the second segment of the first data in accordance with a second wireless standard; and
the second wireless receiver is configured to wirelessly receive a second piece of the second data in accordance with a second wireless standard.

10. A computer component for communicating data between a computer and a network, the computer component comprising:
a dual band management component configured to receive first data from at least one of the computer and the network and configured to divide the first data into two or more portions:
a first network adapter electrically coupled to the dual band module and configured to transmit a first portion of the two or more portions in accordance with a first wireless standard over a first frequency band and
a second network adapter electrically coupled to the dual band module and configured to transmit a second portion of the two or more portions in accordance with the first wireless standard over a second frequency band;
wherein:
the first wireless standard is different from the second wireless standard; and
the data comprises the first data.

11. A network interface card adapted for coupling a computer to a network, the network interface card comprising:
a first wireless transmitter;
a second wireless transmitter;
a first wireless receiver;
a second wireless receiver; and
a dual band management component configured to communicate a first segment of first data to the first wireless transmitter and a second segment of the first data to the second wireless transmitter,
wherein:
the first wireless transmitter is configured to wirelessly transmit the first segment of the first data in accordance with a first wireless standard over a first frequency band;
the first wireless receiver is configured to wirelessly receive a first piece of a second data in accordance with the first wireless standard over the first frequency band;
the second wireless transmitter is configured to wirelessly transmit the second segment of the first data in accordance with the first wireless standard over a second frequency band; and
the second wireless receiver is configured to wirelessly receive a second piece of the second data in accordance with the first wireless standard over the second frequency band.

12. A method of transmitting data between two electronic devices, the method comprising:
receiving first data from a first one of the two electronic devices;
dividing the first data into at least a first segment and a second segment;
transmitting the first segment in accordance with a first wireless standard to a second one of the two electronic devices; and
transmitting the second segment in accordance with a second wireless standard to the second one of the two electronic devices.

13. The method of claim 12, wherein;
transmitting the first segment comprises;
communicating the first segment in accordance with the first wireless standard using a first network adapter to the second one of the two electronic devices; and
transmitting the second segment comprises:
communicating the second segment in accordance with the second wireless standard using a second network adapter to the second one of the two electronic devices.

14. The method of claim 12 or 13, further comprising:
receiving third data in accordance with the first wireless standard from the second one of the two electronic devices;
receiving fourth data in accordance with the second wireless standard from the second one of the two electronic devices;
combining the third data and fourth data into fifth data; and
communicating the fifth data to the first one of the two electronic devices.

15. A method of transmitting data between two electronic devices, the method comprising:
receiving first data from a first one of the two electronic devices;
dividing the first data into at least a first segment and a second segment;
transmitting the first segment in accordance with a first wireless standard over a first frequency band to a second one of the two electronic devices; and
transmitting the second segment in accordance with the first wireless standard over a second frequency band to the second one of the two electronic devices.
